# EUROPÄISCHE PATENTSCHRIFT

(11) **EP 1 641 854 B1**
(45) Veröffentlichungstag und Bekanntmachung des Hinweises auf die Patenterteilung: **31.01.2007**
(21) Anmeldenummer: 04740537.8
(22) Anmeldetag: 01.07.2004
(51) Int. Cl.: C08G 2/00

(54) **ALKOXYSILANTERMINIERTE PREPOLYMERE**
PREPOLYMERS WITH ALKOXYSILANE END GROUPS
PREPOLYMERES A GROUPES TERMINAUX ALCOXYSILANE

(30) Priorität: 04.07.2003 DE 10330288
(43) Veröffentlichungstag der Anmeldung: 05.04.2006
(73) Patentinhaber: Consortium für elektrochemische Industrie GmbH, 81379 München (DE)
(72) Erfinder: STANJEK, Volker, 81479 München (DE); KINZLER, Carolin, 81373 München (DE); SCHINDLER, Wolfram, 84577 Tüssling (DE); WEIDNER, Richard, 84489 Burghausen (DE)
(74) Vertreter: Fritz, Helmut
(86) Internationale Anmeldenummer: PCT/EP2004/007172
(87) Internationale Veröffentlichungsnummer: WO 2005/003201

(56) Entgegenhaltungen:
- WO-A-92/05212
- WO-A-03/018658
- DE-A- 2 155 258

## Beschreibung

Die Erfindung betrifft alkoxysilanterminierte Prepolymere und die Prepolymere enthaltende Massen.

Prepolymersysteme, die über reaktive Alkoxysilylgruppen verfügen, sind seit langem bekannt und werden vielfach zur Herstellung von elastischen Dicht- und Klebstoffen im Industrie- und Baubereich verwendet. In Gegenwart von Luftfeuchtigkeit und geeigneten Katalysatoren sind diese alkoxysilantermierten Prepolymere bereits bei Raumtemperatur in der Lage, unter Abspaltung der Alkoxygruppen und Ausbildung einer Si-O-Si-Bindung miteinander zu kondensieren. Somit lassen sich diese Prepolymere u.a. als einkomponentige Systeme verwenden, welche den Vorteil einer einfachen Handhabung besitzen, da keine zweite Komponente zudosiert und eingemischt werden muß.

Ein weiterer Vorteil von alkoxysilanterminierten Prepolymeren besteht in der Tatsache, daß bei der Härtung weder Säuren noch Oxime oder Amine freigesetzt werden. Anders als bei Kleb- oder Dichtstoffen auf Isocyanatbasis entsteht auch kein CO₂, das als gasförmige Komponente zu einer Blasenbildung führen kann. Anders als isocyanatbasierende Systeme sind alkoxysilanterminierte Prepolymermischungen auch toxikologisch in jedem Falle unbedenklich. Je nach Gehalt an Alkoxysilangruppen und deren Aufbau bilden sich bei der Härtung dieses Prepolymertyps hauptsächlich langkettige Polymere (Thermoplaste), relativ weitmaschige dreidimensionale Netzwerke (Elastomere) oder aber hochvernetzte Systeme (Duroplaste).

Alkoxysilanterminierte Prepolymere können aus unterschiedlichen Bausteinen aufgebaut sein. Üblicherweise besitzen diese Prepolymere ein organisches Rückgrat, d.h. sie sind beispielsweise aus Polyurethanen, Polyethern, Polyestern, Polyacrylaten, Polyvinylestern, Ethylen-Olefincopolymeren, Styrol-Butadiencopolymeren oder Polyolefinen aufgebaut, beschrieben u.a. in EP 0 372 561, EP 0 269 819, WO 00/37533, US 6,207,766 und US 3,971,751. Daneben sind aber auch Systeme weit verbreitet, deren Rückgrat ganz oder zumindest zum Teil aus Organosiloxanen besteht, beschrieben u.a. in WO 96/34030 und US 5,254,657).

Bei einem besonders vorteilhaften Herstellverfahren für alkoxysilanterminierte Prepolymere wird von Polyolen, z.B. von Polyether- oder Polyesterpolyolen, ausgegangen, die in einem ersten Reaktionsschritt mit einem Überschuß eines Di- oder Polyisocyanates umgesetzt werden. Anschließend werden die dabei erhaltenen isocyanatterminierten Prepolymere mit einem γ-aminopropylfunktionellen Alkoxysilan zu dem gewünschten alkoxysilanterminierten Prepolymer umgesetzt. Derartige Systeme sind beispielsweise in EP 1 256 595, EP 0 569 360 oder EP 0 082 528 oder DE 198 49 817 beschrieben.

WO 03/018658 beschreibt alkoxysilanterminierte Prepolymere erhalten durch isocyanatterminerte Prepolymere mit einem amino-methylfunktionellen Alkoxysilan umzusetzenin einem Überschuss von höchstens 1,05:1.

Derartige Systeme besitzen jedoch noch mehrere Nachteile. Einen Nachteil stellt dabei deren nur mäßige Reaktivität gegenüber Feuchtigkeit dar, sowohl in Form von Luftfeuchtigkeit als auch in Form von gegebenenfalls zugesetztem Wasser. Um auch bei Raumtemperatur eine hinreichende Härtungsgeschwindigkeit zu erreichen, ist daher der Zusatz eines Katalysators unbedingt erforderlich. Das ist vor allem deshalb problematisch, da die in der Regel als Katalysatoren eingesetzten zinnorganischen Verbindungen toxikologisch bedenklich sind. Zudem enthalten die Zinnkatalysatoren oftmals auch noch Spuren hochtoxischer Tributylzinnderivate.

Besonders problematisch ist die relativ geringe Reaktivität der alkoxysilanterminierten Prepolymersysteme, wenn keine Methoxysilylterminierungen sondern die nochmals unreaktiveren Ethoxysilylterminierungen verwendet werden. Gerade ethoxysilylterminierte Prepolymere wären jedoch in vielen Fällen besonders vorteilhaft, weil bei ihrer Aushärtung lediglich Ethanol als Spaltprodukt freigesetzt wird.

Um dieses Problem zu umgehen, wurde bereits nach zinnfreien Katalysatoren gesucht. Denkbar sind hier vor allem titanhaltige Katalysatoren, z.B. Titantetraisopropoxylat oder Bis-(acetylacetonato)-diisobutytitanat (beschrieben u.a. in EP 0 885 933). Allerdings besitzen diese Titankatalysatoren den Nachteil, daß sie nicht gemeinsam mit zahlreichen stickstoffhaltigen Verbindungen eingesetzt werden können, da letztere hier als Katalysatorgifte wirken. Die Verwendung von stickstoffhaltigen Verbindungen, z.B. als Haftvermittler, wäre in vielen Fällen jedoch wünschenswert. Zudem dienen Stickstoffverbindungen, z.B. Aminosilane, in vielen Fällen als Edukte bei der Herstellung der silanterminierten Prepolymere.

Einen großen Vorteil können daher alkoxysilanterminierte Prepolymersysteme darstellen, wie sie in DE 101 42 050, DE 101 39 132, DE 21 55 259, DE 21 55 258, DE 1 905 100 und DE 1 812 564 beschrieben sind. Diese Prepolymere zeichnen sich dadurch aus, daß sie Alkoxysilylgruppen enthalten, die nur durch einen Methylspacer von einem elektronegativen Heteroatom mit mindestens einem freien Elektronenpaar getrennt sind, d.h. von einem Sauerstoff-, Stickstoff- oder Schwefelatom. Dadurch besitzen diese Prepolymere eine extrem hohe Reaktivität gegenüber (Luft-)Feuchtigkeit, so daß sie zu Prepolymerabmischungen verarbeitet werden können, die auch mit wenig oder sogar ohne Katalysatoren auskommen können, die Titan, Zinn oder weitere (Schwer-)Metalle enthalten, und dennoch bei Raumtemperatur mit hinreichend kurzen Klebfreizeiten bzw. mit hinreichend hoher Geschwindigkeit aushärten.

Alle alkoxysilanterminierten Prepolymere des Standes der Technik weisen jedoch den Nachteil auf, daß sie bei einer Aushärtung nur zu Massen mit einer mäßigen Reißfestigkeit und/oder Reißdehnung führen. Ausnahme stellen hier lediglich Systeme mit einem hohen Gehalt an Harnstoffeinheiten im Prepolymer dar, wie sie in DE 21 55 259 oder DE 21 55 258 beschrieben werden. Dieser hohe Gehalt an Harnstoffeinheiten führt jedoch dazu, daß diese Prepolymere bereits im unvernetzten Zustand fest sind und nur in stark verdünnten Lösungen mit einem Feststoffgehalt << 50 % handhabbar sind. Derartige Prepolymerlösungen sind für die meisten Anwendungen völlig ungeeignet.

Silanvernetzende Abmischungen, die zu Massen mit hoher Reißfestigkeit und Bruchdehnung aushärten, werden vor allem bei Klebstoffanwendungen gefordert. Ein Ansatz zur Verbesserung der Reißfestigkeit von alkoxysilanvernetzenden Klebstoffen kann der Einsatz von optimierten Füllstoffgemischen darstellen, die in das alkoxysilanterminierte Polymer eingearbeitet werden. Ein derartiges Verfahren wird in EP 1 256 595 beschrieben. Hier werden einem alkoxysilanterminierten Prepolymer eine bestimmte Rußsorte sowie feinteiliges beschichtetes Calciumcarbonat zugemischt. Mit diesem System konnten zwar hervorragende Reißdehnungen von 4,5 - 5,9 MPa erreicht werden, die erzielbaren Bruchdehnungen hingegen waren mit 250 - 300 % jedoch noch sehr mäßig. Zudem lassen sich mit derartigen rußgefüllten Massen lediglich schwarze Klebstoffe herstellen. Andere Farben, obgleich oftmals erwünscht, sind nicht möglich. Außerdem kann es, z.B. wenn man aus optischen Gründen transparente Massen erhalten will, wünschenswert sein, ganz auf Füllstoffe zu verzichten. Ein weiterer Nachteil der in EP 1 256. 595 beschriebenen Massen ist zudem die oben bereits beschriebene mäßige Reaktivität gegenüber Feuchtigkeit, besonders gegenüber Luftfeuchtigkeit.

Daher verbleibt die Anforderung, nicht nur Abmischungen aus silanterminierten Prepolymere, sondern die auch silanterminierten Prepolymere selbst gegenüber dem Stand der Technik zu verbessern. Diese verbesserten Prepolymere sollen sich nicht nur durch eine hohe Reaktivität gegenüber Luftfeuchtigkeit auszeichnen, sondern auch unabhängig von den verwendeten Füllstoffen eine verbesserte Reißfestigkeit sowie eine erheblich verbesserte Bruchdehnung aufweisen.

Gegenstand der Erfindung sind Prepolymere (A) mit Endgruppen der allgemeinen Formel [1]

-A-CH₂-SiR¹ₐ(OR²)₃₋ₐ [1],

wobei
- **A**: eine zweibindige Bindegruppe ausgewählt aus -O-, -S-, -(R³)N-, -O-CO-N(R³)-, -N(R³)-CO-O-, -NH-CO-NH-, -N(R⁴)-CO-NH-, -NH-CO-N(R⁴)-, -N(R⁴)-CO-N(R⁴)-,
- **R¹**: einen gegebenenfalls halogensubstituierten Alkyl-, Cycloalkyl-, Alkenyl- oder Arylrest mit 1-10 Kohlenstoffatomen,
- **R²**: einen Alkylrest mit 1-6 Kohlenstoffatomen oder einen (ω-Oxaalkyl-alkylrest mit insgesamt 2-10 Kohlenstoffatomen,
- **R³**: Wasserstoff, einen gegebenenfalls halogensubstituierten cyclischen, linearen oder verzweigten C₁- bis C₁₈-Alkyl- oder -Alkenylrest oder einen C₆- bis C₁₈-Arylrest,
- **R⁴**: einen gegebenenfalls halogensubstituierten cyclischen, linearen oder verzweigten C₁- bis C₁₈-Alkyl- oder - Alkenylrest oder einen C₆- bis C₁₈-Arylrest und
- **a**: den Wert 0, 1 oder 2 bedeuten,
wobei die Prepolymere (A) erhältlich sind durch Umsetzung von isocyanatfunktionellen Prepolymeren (A1) mit Alkoxysilanen (A2), die über mindestens eine isocyanatreaktive Gruppe verfügen,
sowie gegebenenfalls weiteren Komponenten,
mit der Maßgabe, daß die Alkoxysilane (A2) im Überschuß eingesetzt werden, so daß ein Verhältnis von isocyanatreaktiven Gruppen zu Isocyanatgruppen von mindestens 1,2:1 besteht.

Die so hergestellten Prepolymere (A) zeigen eine hohe Reaktivität gegenüber Luftfeuchtigkeit. Sie weisen nach der Vernetzung eine erheblich verbesserte Reißfestigkeit sowie eine erheblich verbesserte Bruchdehnung auf. Auch Massen (M), die die silanterminierten Prepolymere (A) enthalten, zeigen unabhängig von gegebenenfalls verwendeten Füllstoffen die verbesserte Reißfestigkeit und Bruchdehnung.

Die Prepolymere (A) sind isocyanatfrei. Zudem zeichnen sie sich durch die Tatsache aus, daß sie Alkoxysilylgruppen der allgemeinen Formel [1] enthalten, die nur durch einen Methylspacer von einem elektronegativen Heteroatom mit mindestens einem freien Elektronenpaar getrennt sind. Dadurch besitzen die Prepolymere (A) eine extrem hohe Reaktivität gegenüber (Luft-) Feuchtigkeit, so daß sie zu Polymerabmischungen (M) verarbeitet werden können, die auch mit wenig oder sogar ohne Zinnkatalysator, bevorzugt ohne Zinn- oder Titankatalysator, besonders bevorzugt ganz ohne schwermetallhaltigen Katalysator bei Raumtemperatur mit hinreichend kurzen Klebfreizeiten bzw. mit hinreichend hoher Geschwindigkeit aushärten.

Als Reste **R¹** werden Methyl-, Ethyl- oder Phenylgruppen bevorzugt. Bei den Resten **R²** handelt es sich bevorzugt um Methyl- oder Ethylgruppen und als Rest **R³** wird Wasserstoff bevorzugt, während es sich bei den Resten **R⁴** bevorzugt um Alkylreste mit 1-4 Kohlenstoffatomen, Cyclohexyl- und Phenylreste handelt.

Besonders bevorzugt sind alkoxysilylterminierte Prepolymere (A), deren vernetzbare Alkoxysilylgruppen durch einen Methylspacer von einer Urethan- oder Harnstoffgruppen getrennt sind, d.h. Polymere (A) der allgemeinen Formel [1], bei denen **A** ausgewählt wird aus den Gruppen -NH-CO-O- und -NH-CO-N(R³)-.

Bei der Herstellung der Prepolymere (A) wird die Alkoxysilankomponente (A2) bevorzugt in einem Überschuß eingesetzt, so daß ein Verhältnis von isocyanatreaktiven Gruppen zu Isocyanatgruppen von 1,4:1 bis 4:1, insbesondere 1,5:1 bis 2,5:1 besteht.

Besonders günstige Eigenschaften weisen dabei Prepolymere (A) auf, die mit Alkoxysilylgruppen der allgemeinen Formel [1] terminiert sind, wenn diese Alkoxysilylgruppen zu mindestens 50 %, insbesondere mindestens 70 % aus Dialkoxysilylgruppen (a = 1) bestehen. Prepolymere (A), die ausschließlich Dialkoxysilylgruppen der allgemeinen Formel [1] enthalten, sind nicht nur besonders bevorzugt sondern auch logistisch einfach zugänglich, da zur ihrer Herstellung lediglich ein Silantyp (A4) benötigt wird.

Die Hauptketten der alkoxysilanterminierten Polymere (A) können verzweigt oder unverzweigt sein, wobei unverzweigte oder nur schwach verzweigte Hauptketten bevorzugt werden. Die mittleren Kettenlängen können beliebig, entsprechend der jeweils gewünschten Eigenschaften sowohl der unvernetzten Mischung als auch der ausgehärteten Masse, angepaßt werden.

Bei der Herstellung der Prepolymere (A) werden als isocyanatfunktionelle Prepolymere (A1) bevorzugt urethangruppenhaltige Prepolymere eingesetzt, wie sie durch eine Umsetzung von Polyolen (A11) und mit Di- oder Polyisocyanaten (A12) erhältlich sind.

Als Polyolkomponente (A11) für die Herstellung der isocyanatfunktionellen Prepolymere (A1) können prinzipiell sämtliche Polyole mit einem bevorzugten mittleren Molekulargewicht Mn von 1000 bis 25000 eingesetzt werden. Dabei kann es sich beispielsweise um hydroxylfunktionelle Polyether, Polyester, Polyacrylate und -methacrylate, Polycarbonate, Polystyrole, Polysiloxane, Polyamide, Polyvinylester, Polyvinylhydroxide oder Polyolefine wie z.B. Polyethylen, Polybutadien, Ethylen-Olefincopolymere oder Styrol-Butadiencopolymere handeln.

Bevorzugt werden Polyole (A11) mit einem mittleren Molekulargewicht Mn von 2000 bis 25000, besonders bevorzugt von 4000 bis 20000 eingesetzt. Besonders geeignete Polyole (A11) sind aromatische und/oder aliphatische Polyesterpolyole und Polyetherpolyole, wie sie in der Literatur vielfach beschrieben sind. Die als Polyole (A11) eingesetzten Polyether und/oder Polyester können dabei sowohl linear als auch verzweigt sein, wobei jedoch unverzweigte, lineare Polyole bevorzugt werden.

Zudem können Polyole (A11) auch Substituenten wie z.B. Halogenatome besitzen.

Ebenso können als Polyole (A11) auch hydroxyalkyl- oder aminoalkylterminierte Polysiloxane der allgemeinen Formel [2]

Z-R⁵-[Si(R⁴)₂-O-]ₙ-Si(R⁴)₂-R⁵-Z [2]

eingesetzt werden, in der
- **R⁵**: einen Kohlenwasserstoffrest mit 1 bis 12 Kohlenstoffatomen, bevorzugt Methylreste,
- **R⁶**: eine verzweigte oder unverzweigte Kohlenwasserstoffkette mit 1-12 Kohlenstoffatomen, bevorzugt n-Propyl,
- **n**: eine Zahl von 1 bis 3000, bevorzugt eine Zahl von 10 bis 1000 und
- **Z**: eine OH- oder NHR³-Gruppe bedeuten
und **R³** die bei der allgemeinen Formel [1] angegebene Bedeutung aufweist.

Selbstverständlich ist auch der Einsatz beliebiger Mischungen der verschiedenen Polyoltypen möglich. Besonders bevorzugt werden jedoch lineare Polyetherpolyole als Polyole (A11) verwendet, wobei vor allem Polypropylenglycole eine besonders hohe Eignung zeigen.

Als Di- oder Polyisocyanate (A12) für die Herstellung der isocyanatfunktionellen Prepolymere (A1) können prinzipiell sämtliche gebräuchlichen Isocyanate eingesetzt werden, wie sie in der Literatur vielfach beschrieben sind. Gängige Diisocyanate (A12) sind beispielsweise Diisocyanatodiphenylmethan (MDI), sowohl in Form von rohem oder technischem MDI als auch in Form reiner 4,4' bzw. 2,4' Isomeren oder deren Mischungen, Tolylendiisocyanat (TDI) in Form seiner verschiedenen Regioisomere, Diisocyanatonaphthalin (NDI), Isophorondiisocyanat (IPDI), perhydriertes MDI (H-MDI) oder auch von Hexamethylendiisocyanat (HDI). Beispiele für Polyisocyanate (A3) sind polymeres MDI (P-MDI), Triphenylmethantriisocanat oder Isocyanurat- oder Biuret-triisocyanate. Sämtliche Di- und/oder Polyisocyanate (A12) können einzeln oder auch in Mischungen eingesetzt werden. Bevorzugt werden jedoch ausschließlich Diisocyanate eingesetzt. Falls die UV-Stabilität der Prepolymere (A) oder der aus diesen Prepolymeren hergestellten ausgehärteten Materialien auf Grund der jeweiligen_Anwendung von Bedeutung ist, werden bevorzugt aliphatische Isocyanate als Komponente (A12) verwendet.

Als Alkoxysilane (A2) für die Herstellung der Prepolymere (A) können prinzipiell sämtliche Alkoxysilane eingesetzt werden, die über eine isocyanatreaktive Gruppe verfügen. Die Alkoxysilane dienen zum Einbau der Alkoxysilylterminierungen in die Prepolymere (A). Als Alkoxysilane (A2) werden dabei vorzugsweise Verbindungen eingesetzt, welche ausgewählt werden aus Silanen der allgemeinen Formeln [3] 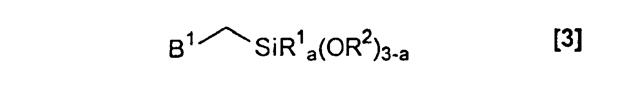 wobei
**B¹** eine OH-, SH-, NH₂- oder eine HR³N-Gruppe bedeutet und
**R¹, R², R³** und a die bei der allgemeinen Formel [1] angegebenen Bedeutungen aufweisen.

**B¹** ist die isocyanatreaktive Gruppe. Als Gruppe B¹ ist die HR³N-Gruppe bevorzugt. Die Prepolymere (A) weisen dann eine hohe Härtungsgeschwindigkeit auf.

Dabei können einzelne Silane (A2) sowie auch Mischungen verschiedener Silane (A2) eingesetzt werden. Die entsprechenden Silane lassen sich durch eine Reaktion aus Chlormethyltrialkoxysilan, Chlormethyldialkoxymethylsilan oder Chloralkoxydimethylsilan mit einem Amin der Formel NH₂R³, d.h. aus sehr einfachen und preiswerten Edukten, problemlos in nur einem Reaktionsschritt herstellen.

Die Herstellung der Prepolymere (A) erfolgt durch ein einfaches Zusammengeben der beschriebenen Komponenten, wobei gegebenenfalls noch ein Katalysator zugegeben und/oder bei erhöhter Temperatur gearbeitet werden kann.

Bei einem bevorzugten Verfahren wird zunächst eine Polyolkomonente (A11) mit einer Di- und/oder Polyisocyanatkomponente (A12) sowie gegebenenfalls weiteren Komponenten umgesetzt. Ob der relativ hohen Exothermie dieser Reaktionen kann es dabei vorteilhaft sein, die einzelnen Komponenten sukzessive zuzugeben, um die freiwerdende Wärmemenge besser kontrollieren zu können. Anschließend wird das dabei erhaltene isocyanatterminierte Prepolymer (A1) mit der Alkoxysilankomponente (A2) sowie gegebenenfalls weiteren Komponenten umgesetzt. Wie beschrieben wird die Alkoxysilankomponente (A2) im Überschuß eingesetzt. Bevorzugt wird dabei die Komponente (A2) unter starkem Rühren in einem Guß oder zumindest sehr zügig, d.h. innerhalb weniger Minuten zugegeben, so daß die Zeitspanne, in der die Komponente (A2) im Unterschuß vorliegt, auf wenige Minuten beschränkt ist. Alternativ ist es auch möglich die Komponente (A2) im Überschuß vorzulegen und die Komponenten (A1) zuzugeben. Prinzipiell ist auch eine kontinuierliche Prepolymerherstellung, z.B. in einem Röhrenreaktor, vorstellbar. Eine gesonderte Reinigung oder sonstige Aufarbeitung des Prepolymers (A) ist in der Regel nicht erforderlich.

In einer bevorzugten Ausführungsform der Erfindung sind die Konzentrationsverhältnisse während der Prepolymerherstellung sowie die Reaktionsbedingungen so gewählt, daß mindestens 70 %, bevorzugt mindestens 80 %, insbesondere mindestens 90 % der Kettenenden der Prepolymere (A) mit Alkoxysilylgruppen der allgemeinen Formel (1) terminiert sind.

Die bei der Herstellung der Prepolymere (A) auftretenden Reaktionen zwischen Isocyanatgruppen und isocyanatreaktiven Gruppen können gegebenenfalls durch einen Katalysator beschleunigt werden. Bevorzugt werden dabei dieselben Katalysatoren eingesetzt, die unten auch als Härtungskatalysatoren (C) aufgeführt sind. Gegebenenfalls ist es sogar möglich, daß die Herstellung der Prepolymere (A) durch dieselben Katalysatoren katalysiert wird, die später bei der Aushärtung der fertigen Prepolymerabmischungen auch als Härtungskatalysator (C) dient. Dies hat den Vorteil, daß der Härtungskatalysator (C) bereits in dem Prepolymer (A) enthalten ist und bei der Compoundierung der fertigen Prepolymerabmischung nicht mehr gesondert zugegeben werden muß. Selbstverständlich können dabei anstelle eines Katalysators auch Kombinationen mehrerer Katalysatoren eingesetzt werden.

Um bei Raumtempratur eine schnelle Aushärtung der Abmischungen aus den Prepolymeren (A) zu erreichen, kann gegebenenfalls ein Härtungskatalysator (C) zugesetzt werden. Wie bereits erwähnt kommen hier u.a. die zu diesem Zwecke üblicherweise verwendeten organischen Zinnverbindungen, wie z.B. Dibutylzinndilaurat, Dioctylzinndilaurat, Dibutylzinndiacetylacetonat, Dibutylzinndiacetat oder Dibutylzinndioctoat etc., in Frage. Des weiteren können auch Titanate, z.B. Titan(IV)isopropylat, Eisen(III)-Verbindungen, z.B. Eisen(III)-acetylacetonat, oder auch Amine, z.B. Triethylamin, Tributylamin, 1,4-Diazabicyclo[2,2,2]octan, 1,8-Diazabicyclo[5.4.0] undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenlyamin, N-Ethylmorpholinin etc., eingesetzt werden. Auch organische oder anorganische Brönstedsäuren wie Essigsäure, Trifluoressigsäure oder Benzoylchlorid, Salzsäure, Phoshorsäure deren Mono- und/oder Diester, wie z.B. Butylphosphat, (Iso-) Propylphosphat, Dibutylphosphat etc., sind als Katalysatoren [C] geeignet. Daneben können hier aber auch zahlreiche weitere organische und anorganische Schwermetallverbindungen sowie organische und anorganische Lewissäuren oder -basen eingesetzt werden. Zudem kann die Vernetzungsgeschwindigkeit auch durch die Kombination verschiedener Katalysatoren bzw. von Katalysatoren mit verschiedenen Cokatalysatoren weiter gesteigert bzw. genau auf den jeweiligen Bedarf hin abgestimmt werden. Dabei werden Abmischungen deutlich bevorzugt, die Prepolymere (A) mit hochreaktiven Alkoxysilylgruppen der allgemeinen Formel [1] enthalten, und somit keine schwermetallhaltigen Katalysatoren (C) benötigen, um auch bei Raumtemperatur ausreichend kurze Härtungszeiten zu erreichen.

Der Einsatz von Prepolymeren (A) mit Silantermini der allgemeinen Formel [1] hat zudem den besonderen Vorteil, daß sich so auch Massen (M) herstellen lassen, welche ausschließlich Ethoxysilylgruppen enthalten, d.h. Silylgruppen der allgemeinen Formel [1] mit R² = Ethyl. Diese Massen (M) sind gegenüber Feuchtigkeit so reaktiv, daß sie auch ohne Zinnkatalysatoren mit hinreichend hoher Geschwindigkeit aushärten, obgleich Ethoxysilylgruppen generell weniger reaktiv sind als die entsprechenden Methoxysilylgruppen. So sind auch mit ethoxysilanterminierten Polymeren (A) zinnfreie Systeme möglich. Derartige Polymerabmischungen (M), die ausschließlich ethoxysilanterminierte Polymere (A) enthalten, besitzen den Vorteil, daß sie beim Härten lediglich Ethanol als Spaltprodukt freisetzen. Sie stellen eine bevorzugte Ausführungsform dieser Erfindung dar.

Die Prepolymer (A) werden bevorzugt in Abmischungen eingesetzt, die neben den bei der Prepolymersynthese im Überschuß zugegebenen Silanen (A2) noch weitere niedermolekulare Alkoxysilane (D) enthalten. Diese Alkoxysilane (D) können dabei mehrere Funktionen übernehmen. So können sie beispielsweise als Wasserfänger dienen, d.h. sie sollen eventuell vorhandene Feuchtigkeitsspuren abfangen und so die Lagerstabilität der entsprechenden silanvernetzenden Massen (M) erhöhen. Selbstverständlich müssen diese zumindest eine vergleichbar hohe Reaktivität gegenüber Feuchtigkeitsspuren besitzen wie das Prepolymer (A). Geeignet als Wasserfänger sind daher vor allem hochreaktive Alkoxysilane (D) der allgemeinen Formel [4] 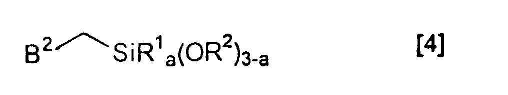 wobei
- **B²**: eine R³O-CO-NH-, R³R³N-CO-NH-, OR³-, SR³-, NH²-, NHR³- oder N(R³)₂-Gruppe bedeutet und
- **R¹, R², R³**: und a die bei der allgemeinen Formel [1] angegebenenBedeutungen aufweisen. Ein besonders bevorzugter Wasserfänger ist dabei das Carbamatosilan, bei dem B² eine R³O-CO-NH-Gruppe darstellt.

Des weiteren können die niedermolekularen Alkoxysilane (D) auch als Vernetzer und/oder Reaktivverdünner dienen. Zu diesem Zweck sind prinzipiell sämtliche Silane geeignet, die über reaktive Alkoxysilylgruppen verfügen, über die sie während der Aushärtung der Polymerabmischung mit in das entstehende dreidimensionale Netzwerk eingebaut werden können. Die Alkoxysilane (D) könnten dabei zu einer Steigerung der Netzwerkdichte und damit zur Verbesserung der mechanischen Eigenschaften, z.B. der Reißfestigkeit, der ausgehärteten Masse beitragen. Zudem können sie auch die Viskosität der entsprechenden Prepolymerabmischungen senken. Als Alkoxysilane (D) eignen sich in dieser Funktion beispielsweise Alkoxymethyltrialkoxysilane und Alkoxymethyldialkoxyalkylsilane. Als Alkoxygruppen werden dabei Methoxy- und Ethoxygruppen bevorzugt. Zudem können auch die preisgünstigen Alkyltrimethoxysilane, wie Methyltrimethoxysilan sowie Vinyl- oder Phenyltrimethoxysilan, sowie deren Teilhydrolysate geeignet sein.

Auch können die niedermolekularen Alkoxysilane (D) als Haftvermittler dienen. Hier können vor allem Alkoxysilane eingesetzt werden, die über Aminofunktionen oder Epoxyfunktionen verfügen. Als Beispiele seien γ-Aminopropyltrialkoxysilane, γ-[N-Aminoethylamino]-propyltrialkoxysilane, γ-Glycidoxy-propyltrialkoxysilane sowie sämtliche Silane entsprechend der Formel [4], bei denen **B²** für eine stickstoffhaltige Gruppe steht, genannt.

Schließlich können die niedermolekularen Alkoxysilane (D) sogar als Härtungskatalysatoren oder -cokatalysatoren dienen. Zu diesem Zweck eignen sich vor allem sämtliche basischen Aminosilane, wie z.B. sämtliche Aminopropylsilane, *N-*Aminoethylaminopropylsilane sowie auch sämtliche Silane entsprechend der Formel [4] soweit es sich bei **B²** um eine NH₂-, NHR⁴-, N(R⁴)₂-Gruppe handelt.

Die Alkoxysilane (D) können den Prepolymeren (A) zu jedem beliebigen Zeitpunkt zugegeben werden. Soweit sie über keine NCO-reaktiven Gruppen verfügen, können sie sogar bereits während der Synthese der Prepolymere (A) zugesetzt werden. Dabei können, bezogen auf 100 Gewichtsteile Prepolymer (A), bis zu 100 Gewichtsteile, vorzugsweise 1 bis 40 Gewichtsteile eines niedermolekularen Alkoxysilanes (D) zugesetzt werden.

Des weiteren werden Abmischungen aus den alkoxysilantermierten Prepolymeren (A) üblicherweise Füllstoffe (E) zugegeben. Die Füllstoffe (E) führen dabei zu einer erheblichen Eigenschaftsverbesserung der resultierenden Abmischungen (M). Vor allem die Reißfestigkeit wie auch die Bruchdehnung können durch den Einsatz von geeigneten Füllstoffen erheblich gesteigert werden.

Als Füllstoffe (E) eigenen sich dabei sämtliche Materialien, wie sie im Stand der Technik vielfach beschrieben sind. Beispiele für Füllstoffe sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Calciumcarbonat, Metalloxidpulver, wie Aluminium-, Titan-, Eisen-, oder Zinkoxide bzw. deren Mischoxide, Bariumsulfat, Calciumcarbonat, Gips, Siliciumnitrid, Siliciumcarbid, Bornitrid, Glas- und Kunststoffpulver; verstärkende Füllstoffe, also Füllstoffe mit einer BET-Oberfläche von mindestens 50 m²/g, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststoffasern. Die genannten Füllstoffe können hydrophobiert sein, beispielsweise durch die Behandlung mit Organosilanen bzw. -siloxanen oder durch Verätherung von Hydroxylgruppen zu Alkoxygruppen. Es kann eine Art von Füllstoff (E), es kann auch ein Gemisch von mindestens zwei Füllstoffen (E) eingesetzt werden.

Die Füllstoffe (E) werden bevorzugt in einer Konzentration von 0-90 Gew.-% bezogen auf die fertige Abmischung eingesetzt, wobei Konzentrationen von 30-70 Gew.-% besonders bevorzugt sind. In einer bevorzugten Anwendung werden Füllstoffkombinationen (E) eingesetzt, die neben Calciumcarbonat noch pyrogene Kieselsäure und/oder Ruß enthalten.

Auch Massen (M), welche keine Füllstoffe (E) enthalten, sind bevorzugt. So besitzen die Prepolymere (A) nach der Aushärtung bereits eine relativ hohe Reißdehnung, so daß sie auch ungefüllte Massen (M) ermöglichen. Vorteile ungefüllter Massen (M) sind deutlich niedrigere Viskosität sowie Transparenz.

Die Massen (M) können zudem auch noch geringe Mengen eines organischen Lösungsmittels (F) enthalten. Dieses Lösungsmittel dient dabei der Erniedrigung der Viskosität der unvernetzten Massen. Als Lösungsmittel (F) kommen prinzipiell sämtliche Lösungsmittel sowie Lösemittelmischungen in Betracht. Als Lösungsmittel (F) werden bevorzugt Verbindungen eingesetzt, die über ein Dipolmoment verfügen. Besonders bevorzugte Lösungsmittel verfügen über ein Heteroatom mit freien Elektronenpaaren, die Wasserstoffbrückenbindungen eingehen können. Bevorzugte Beispiele für solche Lösungsmittel sind Ether wie z.B. t-Butyl-methylether, Ester, wie z.B. Ethylacetat oder Butylacetat sowie Alkohole, wie z.B. Methanol, Ethanol sowie die verschiedenen Regioisomere des Propanols und Butanols. Die Lösungsmittel (F) werden bevorzugt in einer Konzentration von 0-20 Vol.-% bezogen auf die fertigen Massen (M), incl. aller Füllstoffe (E) eingesetzt, wobei Lösungsmittelkonzentrationen von 0-5 Vol.-% besonders bevorzugt sind.

Die Massen (M) können als weitere Komponenten an sich bekannte Hilfsstoffe, wie von den Komponenten (D) abweichende Wasserfänger und/oder Reaktivverdünner sowie Haftvermittler, Weichmacher, Thixotropiermittel, Fungizide, Flammschutzmittel, Pigmente etc. enthalten. Auch Lichtschutzmittel, Antioxidantien, Radikalfänger sowie weitere Stabilisatoren können den Massen (M) zugesetzt werden. Zur Erzeugung der jeweils gewünschten Eigenschaftsprofile, sowohl der unvernetzten Massen (M) als auch der ausgehärteten Massen (M), sind derartige Zusätze in der Regel unverzichtbar.

Für die Massen (M) existieren zahllose verschiedene Anwendungen im Bereich der Kleb-, Dicht- und Fugendichtstoffe, Oberflächenbeschichtungen sowie auch bei der Herstellung von Formteilen. Auf Grund ihrer verbesserten Reißfestigkeit sind die Massen (M) besonders für Klebstoffanwendungen geeignet. Der Einsatz der Prepolymere (A) in Klebstoffen ist daher bevorzugt. Dabei sind sie für zahllose unterschiedliche Untergründe, wie z.B. mineralische Untergründe, Metalle, Kunststoffe, Glas, Keramik etc., geeignet.

Die Massen (M), können dabei sowohl in reiner Form als auch in Form von Lösungen oder Dispersionen zum Einsatz kommen.

Alle vorstehenden Symbole der vorstehenden Formeln weisen ihre Bedeutungen jeweils unabhängig voneinander auf. In allen Formeln ist das Siliciumatom vierwertig.

Soweit nicht anders angegeben sind alle Mengen- und Prozentangaben auf das Gewicht bezogen, alle Drücke 0,10 MPa (abs.) und alle Temperaturen 20°C.

Als Maß für die Reaktivitäten der Massen (M), bzw. für die Reaktivitäten der nicht erfindungsgemäßen Polymerabmischungen in den Vergleichsbeispielen sind jeweils die Hautbildungszeiten angegeben. Unter Hautbildungszeiten ist dabei diejenige Zeitspanne zu verstehen, die nach dem Ausbringen der Masse (M), an die Luft vergeht, bis die Polymeroberfläche soweit gehärtet ist, daß nach einer Berührung dieser Oberfläche mit einem Bleistift weder Masse (M) daran haften bleibt, noch eine Fadenbildung auftritt.

### Beispiel 1:

### Herstellung von N-Cyclohexyl-aminomethyl-dimethoxysilan:

1486,5 g (15 mol) Cyclohexylamin und 600 g Cyclohexan als Lösungsmittel werden in einem 4 Liter 4-Hals-Kolben komplett vorgelegt und anschließend mit Stickstoff inertisiert. Man heizt auf eine Temperatur von 85 °C auf und tropft 773,4 g (5 mol) Chlormethyl-methyldimethoxysilan über 2 h zu (Temperatur < 95 °C) und rührt für weitere 2 Stunden bei 95 °C. Nach einer Zugabe von ca. 300 g des Silans fällt vermehrt Cyclohexylamin-hydrochlorid als Salz aus, jedoch bleibt die Suspension bis zum Dosierende gut rührbar. Die Suspension wird über Nacht stehen lassen und dann mit ca. 300 ml Cyclohexan versetzt. Im Teilvakuum wird das überschüssige Amin und das Lösungsmittel Cyclohexan bei 60 - 70 °C destillativ entfernt. Der Rückstand wird abgekühlt und mit weiteren 300 ml Cyclohexan versetzt, um das Hydrochlorid vollständig zu fällen. Die Suspension wird filtriert und das Lösungsmittel wiederum im Teilvakuum bei 60 - 70 °C entfernt. Der Rückstand wird destillativ gereinigt (106 - 108 °C bei 15 mbar). Es wird eine Ausbeute von 761 g, d.h. 70% der Theorie erreicht, bei einer Produktreinheit von ca. 99,5 %.

### Beispiel 2:

### Herstellung von Methoxymethyltrimethoxysilan (MeO-TMO):

Zu 315 ml Methanol werden unter leichter Rührung 68 g (1,26 mol) Natriummethanolat zugegeben. Nachdem sich das Natriummethanolat bei 65 °C vollständig gelöst hat, werden 205 g (1,2 mol) Chlormethyltrimethoxysilan innerhalb von 2 h bei einer Temperatur von 45 - 50 °C zugetropft. Bei der leicht exothermen Neutralisation fällt NaCl aus. Danach wird unter langsamen Abkühlen auf 25 °C 1 Stunde nachgerührt. NaCl wird über eine Fritte por. 3 filtriert und mit wenig Methanol nachgewaschen.

Im Teilvakuum wird das Lösungsmittel Methanol bei 60 °C entfernt. Der Rückstand wird destillativ gereinigt (78 - 93 °C bei 90 mbar). Es wird eine Ausbeute von 140 g, d.h. 70 % der Theorie erreicht.

### Beispiel 3:

### Herstellung von Trimethoxysilylmethylcarbaminsäuremethylester (C-TMO) :

61,3 g (7,56 mol) extra fein gemahlenes Kaliumisocyanat werden in einem 1 Liter 4-Hals-Kolben eingewogen. Anschließend werden 404 g (0,51 1, 12,6 mol) Methanol, 184,0 g (0,196 1) Dimethylformamid sowie 100,7 g (0,59 mol) Chlormethyltrimethoxysilan eingefüllt. Unter Rühren wird die Reaktionsmischung zum Sieden erhitzt und insgesamt 10 h unter Rückfluß gehalten, wobei die Siedetemperatur von 100 °C auf 128 °C ansteigt und dann stabil bleibt. Nach dem Abkühlen auf Raumtemperatur wird das gebildete Kaliumchlorid über eine Nutsche abgetrennt und der Filterkuchen mit 1,1 1 Methanol gewaschen. Im Rotationsverdampfer werden die Lösungsmittel Methanol und Dimethylformamid entfernt. Die verbliebenen Mengen an Kaliumchlorid werden abgetrennt. Die Rohlösung wird destillativ gereinigt (Kopftemperatur 79 - 85 °C bei 3 mbar). Insgesamt konnten 60,4 g (53 % d. Th. [114 g]) C-TMO erhalten werden.

### Beispiel 4:

### Herstellung eines Prepolymers (A):

In einem 250 ml Reaktionsgefäß mit Rühr-, Kühl und Heizmöglichkeiten werden 152 g (16 mmol) eines Polypropylenglykols mit einem mittleren Molekulargewicht von 9500 g/mol (Acclaim^{®} 12200 der Fa. Bayer) vorgelegt und 30 Minuten bei 80 °C im Vakuum entwässert. Anschließend wird die Heizung entfernt und unter Stickstoff 7,1 g (32 mmol) Isophorondiisocyanat und 80 mg Dibutylzinndilaurat (entspricht einem Zinngehalt von 100ppm) zugegeben. Nun werden 60 Minuten bei 80 °C gerührt. Das erhaltene NCO-terminierte Polyurethanprepolymer wird danach auf 75 °C abgekühlt und mit 13,9 g (64 mmol, entspricht einem Überschuß von 100 %) N-Cyclohexylaminomethyldimethoxymethylsilan versetzt und 60 min bei 80 °C gerührt. In der resultierenden Prepolymermischung lassen sich IR-spektroskopisch keine Isocyanatgruppen mehr nachweisen. Man erhält ein leicht trübes Prepolymer, daß sich bei 20 °C mit einer Viskosität von 77 Pas problemlos gießen und weiterverarbeiten läßt.

### Herstellung von Prepolymerabmischungen (M):

Allgemeine Vorschrift (Die konkreten Mengenangaben für die einzelnen Komponenten können der Tabelle 1 entnommen werden. Sind einzelnen Komponenten dabei nicht vorhanden, wird auf die jeweiligen Einarbeitungsschritte verzichtet):

Zu dem oben beschriebenen Prepolymer (A) wird Carbamatomethyltrimethoxysilan (C-TMO - hergestellt nach Beispiel 3) zugegeben und 15 Sekunden lang bei 27000 rpm in einem Speedmixer (DAC 150 FV der Firma Hausschild) gemischt. Dann werden Kreide (BLR 3 der Firma Omya), HDK V 15 (Wacker Chemie GmbH, Germany) und Methoxymethyltrimethoxysilan (MeO-TMO hergestellt nach Beispiel 2) zugegeben und 2 mal 20 Sekunden bei einer Umdrehung von 30000 rpm gemischt. Schließlich wird Aminopropyltrimethoxysilan (A-TMO - Silquest^{®} A1110^{®} der Firma Crompton) hinzugegeben und ebenfalls 20 Sekunden bei einer Umdrehung von 30000 rpm gemischt.

**Tabelle 1:**

| Ansatznummer | Bsp. 4-1 | Bsp. 4-2 | Bsp. 4-3 |
|---|---|---|---|
| Polymer | 96% | 65% | 60% |
| Kreide BLR 3 | - | 30% | 30% |
| HDK V-15 | - | - | 5% |
| Silan1 | - | 1% C-TMO | 1% C-TMO |
| Silan2 | 2% MeO-TMO | 2% MeO-TMO | 2% MeO-TMO |
| Silan3 | 2% A-TMO | 2% A-TMO | 2% A-TMO |

### Vergleichsbeispiel 1:

Dieses Vergleichsbeispiel bezieht sich auf das Beispiel 4. Jedoch wird kein Überschuß an *N*-Cyclohexylaminomethyl-dimethoxymethylsilan verwendet.

### Herstellung eines nicht erfindungsgemäßen Prepolymers:

In einem 250 ml Reaktionsgefäß mit Rühr-, Kühl und Heizmöglichkeiten werden 152 g (16 mmol) eines Polypropylenglykols mit einem mittleren Molekulargewicht von 9500g/mol (Acclaim^{®} 12200 der Fa. Bayer) vorgelegt und 30 Minuten bei 80 °C im Vakuum entwässert. Anschließend wird die Heizung entfernt und unter Stickstoff 7,1 g (32 mmol) Isophorondiisocyanat und 80 mg Dibutylzinndilaurat zugegeben. Nun werden 60 Minuten bei 80 °C nachgerührt. Das erhaltene NCO-terminierte Polyurethanprepolymer wird danach auf_75 °C abgekühlt und mit 6,96 g (32 mmol) *N*-Cyclohexylaminomethyl-dimethoxymethylsilan versetzt und 60 min bei 80 °C gerührt. In der resultierenden Prepolymermischung lassen sich IR-spektroskopisch keine Isocyanatgruppen mehr nachweisen. Man erhält ein leicht trübes Prepolymer, daß sich bei 20°C mit einer Viskosität von 278 Pas problemlos gießen und weiterverarbeiten läßt.

### Herstellung nicht erfindungsgemäßer Prepolymerabmischungen:

Allgemeine Vorschrift (Die konkreten Mengenangaben für die einzelnen Komponenten können der Tabelle 2 entnommen werden. Sind einzelnen Komponenten dabei nicht vorhanden, wird auf die jeweiligen Einarbeitungsschritte verzichtet):

Zu dem oben beschriebenen Prepolymer wird Carbamatomethyltrimethoxysilan (C-TMO hergestellt nach Beispiel 3) zugegeben und 15 Sekunden lang bei 27000 rpm in einem Speedmixer (DAC 150 FV der Firma Hausschild) gemischt. Dann werden Kreide (BLR 3 der Firma Omya), HDK V 15 (Wacker Chemie GmbH, Germany) und Methoxymethyltrimethoxysilan (MeO-TMO hergestellt nach Beispiel 2) und 2 mal 20 Sekunden bei einer Umdrehung von 30000 rpm gemischt. Schließlich wird Aminopropyltrimethoxysilan (A-TMO Silquest^{®} A1110 der Firma Crompton) hinzugegeben und ebenfalls 20 Sekunden bei einer Umdrehung von 30000 rpm gemischt.

**Tabelle 2:**

| Ansatznummer | Vbsp. 1-1 | Vbsp. 1-2 | Vbsp. 1-3 |
|---|---|---|---|
| Polymer | 96% | 65% | 60% |
| Kreide BLR 3 | - | 30% | 30% |
| HDK V-15 | - | - | 5% |
| Silan1 | - | 1% C-TMO | 1% C-TMO |
| Silan2 | 2% MeO-TMO | 2% MeO-TMO | 2% MeO-TMO |
| Silan3 | 2% A-TMO | 2% A-TMO | 2% A-TMO |

### Beispiel 5:

### Eigenschaften der ausgehärteten Prepolymerabmischungen

Dieses Beispiel zeigt die Eigenschaften und die Herstellung der Probekörper von Beispiel 4 und Vergleichsbeispiel 1:

Die fertigen Prepolymerabmischungen werden mit Hilfe eines Rakels in eine 2 mm hohe Teflon^{®}-Form verstrichen, wobei die Durchhärtegeschwindikeit ca. 2 mm am Tag beträgt. Nach zweiwöchiger Lagerung werden S1-Prüfkörpe ausgestanzt, deren Zugeigenschaften nach EN ISO 527-2 an der Z010 der Firma Zwick vermessen werden. Die dabei bestimmten Eigenschaften der jeweiligen Prepolymerabmischungen sind in Tabelle 3 aufgelistet. Dabei sind die Abmischungen von
- Beispiel 4.1, Vergleichsbeispiel 1.1
- Beispiel 4.2, Vergleichsbeispiel 1.2
- Beispiel 4.3, Vergleichsbeispiel 1.3
jeweils identisch und unterscheiden sich nur durch das eingesetzte Prepolymer. d.h. die Eigenschaften dieser Massen können jeweils direkt miteinander verglichen werden.

**Tabelle 3:**

| Ansatznummer | Bsp. 4-1 | Bsp. 4-2 | Bsp. 4-3 |
|---|---|---|---|
| Hautbildungszeit | > 2 Std. | > 2 Std. | 55 min |
| Zugfestigkeit [MPa] | 1,02 | 1,82 | 2,49 |
| Reißdehnung [%] | 561,76 | 507,99 | 511,28 |
| Modul [MPa] | 0,24 | 0,53 | 0,98 |
| Shorehärte | 22 | 37 | 41 |
| | | | |

| Ansatznummer | Vbsp. 1-1 | Vbsp. 1-2 | Vbsp. 1-3 |
|---|---|---|---|
| Hautbildungszeit | 50 min | 45 min | 35 min |
| Zugfestigkeit [MPa] | 0,71 | 1,02 | 1,02 |
| Reißdehnung [%] | 515,68 | 641,75 | 353,2 |
| Modul [MPa] | 0,09 | 0,16 | 0,34 |
| Shorehärte | 6 | 6 | 19 |

### Beispiel 6:

### Herstellung eines Prepolymers (A):

In einem 250 ml Reaktionsgefäß mit Rühr-, Kühl und Heizmöglichkeiten werden 160 g (40 mmol) eines Polypropylenglykols mit einem mittleren Molekulargewicht von 4000 g/mol vorgelegt und 30 Minuten bei 80 °C im Vakuum entwässert. Anschließend wird die Heizung entfernt und unter Stickstoff 12,43 g (56 mmol) Isophorondiisocyanat und 80 mg Dibutylzinndilaurat zugegeben. Es wird für 60 Minuten bei 80 °C nachgerührt. Das erhaltene NCO-terminierte Polyurethanprepolymer wird danach auf 75 °C abgekühlt und mit 11,13 g (51,2 mmol - entspricht einem Überschuß von 60 %) *N-*Cyclohexylaminomethyldimethoxymethylsilan versetzt und 60 min bei 80 °C gerührt. In der resultierenden Prepolymermischung lassen sich IR-spektroskopisch keine Isocyanatgruppen mehr nachweisen. Man erhält ein leicht trübes Prepolymer, daß sich bei 20 °C mit einer Viskosität von 155 Pas problemlos gießen und weiterverarbeiten läßt.

### Herstellung von Prepolymerabmischungen (M):

Allgemeine Vorschrift (Die konkreten Mengenangaben für die einzelnen Komponenten können der Tabelle 4 entnommen werden.

Sind einzelnen Komponenten dabei nicht vorhanden, wird auf die jeweiligen Einarbeitungsschritte verzichtet):

Zu dem oben beschriebenen Prepolymer wird Carbamatomethyltrimethoxysilan (C-TMO hergestellt nach Beispiel 3) zugegeben und 15 Sekunden lang bei 27000 rpm in einem Speedmixer (DAC 150 FV der Firma Hausschild) gemischt. Dann werden Kreide (BLR 3 der Firma Omya), HDK V 15 (Wacker Chemie GmbH, Germany) und Methoxymethyltrimethoxysilan (MeO-TMO hergestellt nach Beispiel 2) zugegeben und 2 mal 20 Sekunden bei einer Umdrehung von 30000 rpm gemischt. Schließlich wird Aminopropyltrimethoxysilan (A-TMO Silquest® A1110 der Firma Crompton) hinzugegeben und ebenfalls 20 Sekunden bei einer Umdrehung von 30000 rpm gemischt.

**Tabelle 4:**

| Ansatznummer | Vbsp. 2-1 | Vbsp. 2-2 | Vbsp. 2-3 |
|---|---|---|---|
| Polymer [%] | 96% | 65% | 60% |
| Kreide BLR 3 [%] | - | 30% | 30% |
| HDK V-15 [%] | - | - | 5% |
| Silan 1 [%] | - | 1% C-TMO | 1% C-TMO |
| Silan 2 [%] | 2% MeO-TMO | 2% MeO-TMO | 2% MeO-TMO |
| Silan 3 [%] | 2% A-TMO | 2% A-TMO | 2% A-TMO |

### Vergleichsbeispiel 2:

Dieses Vergleichsbeispiel bezieht sich auf das Beispiel 5. Jedoch wird kein Überschuß an *N*-Cyclohexylaminomethyl-dimethoxymethylsilan verwendet.

### Herstellung eines nicht erfindungsgemäßen Prepolymers:

In einem 250 ml Reaktionsgefäß mit Rühr-, Kühl und Heizmöglichkeiten werden 160 g (40 mmol) eines Polypropylenglykols mit einem mittleren Molekulargewicht von 4000 g/mol vorgelegt und 30 Minuten bei 80 °C im Vakuum entwässert. Anschließend wird die Heizung entfernt und unter Stickstoff 12,43 g (56 mmol) Isophorondiisocyanat und 80 mg Dibutylzinndilaurat zugegeben. Es wird für 60 Minuten bei 80 °C nachgerührt. Das erhaltene NCO-terminierte Polyurethanprepolymer wird danach auf 75 °C abgekühlt und mit 6,96 g (32 mmol) *N*-Cyclohexylaminomethyl-dimethoxymethylsilan versetzt und 60 min bei 80 °C gerührt. In der resultierenden Prepolymermischung lassen sich IR-spektroskopisch keine Isocyanatgruppen mehr nachweisen. Man erhält ein leicht trübes Prepolymer, daß sich bei 20 °C mit einer Viskosität von 285 Pas problemlos gießen und weiterverarbeiten läßt.

### Herstellung von Prepolymerabmischungen (M)

Allgemeine Vorschrift (Die konkreten Mengenangaben für die einzelnen Komponenten können der Tabelle 5 entnommen werden. Sind einzelnen Komponenten dabei nicht vorhanden, wird auf die jeweiligen Einarbeitungsschritte verzichtet):

Zu dem oben beschriebenen Prepolymer (A) wird Carbamatomethyltrimethoxysilan (C-TMO hergestellt nach Beispiel 3) zugegeben und 15 Sekunden lang bei 27000 rpm in einem Speedmixer (DAC 150 FV der Firma Hausschild) gemischt. Dann werden Kreide (BLR 3 der Firma Omya), HDK V 15 (Wacker Chemie GmbH, Germany) und Methoxymethyltrimethoxysilan (MeO-TMO hergestellt nach Beispiel 2) zugegeben und 2 mal 20 Sekunden bei einer Umdrehung von 30000 rpm gemischt. Schließlich wird Aminopropyltrimethoxysilan (A-TMO Silquest® A1110 der Firma Crompton) hinzugegeben und ebenfalls 20 Sekunden bei einer Umdrehung von 30000 rpm gemischt.

**Tabelle 5:**

| Ansatznummer | Vbsp. 2-1 | Vbsp. 2-2 | Vbsp. 2-3 |
|---|---|---|---|
| Polymer [%] | 96% | 65% | 60% |
| Kreide BLR 3 [%] | - | 30% | 30% |
| HDK V-15 [%] | - | - | 5% |
| Silan1 [%] | - | 1% C-TMO | 1% C-TMO |
| Silan2 [%] | 2% MeO-TMO | 2% MeO-TMO | 2% MeO-TMO |
| Silan3 [%] | 2% A-TMO | 2% A-TMO | 2% A-TMO |

### Beispiel 7:

### Eigenschaften der ausgehärteten Prepolymerabmischungen

Dieses Beispiel zeigt die Eigenschaften und die Herstellung der Probekörper von Beispiel 6 und Vergleichsbeispiel 2:

Die fertigen Prepolymerabmischungen werden mit Hilfe eines Rakels in eine 2 mm hohe Teflon^{®}-Form verstrichen, wobei die Durchhärtegeschwindikeit ca. 2 mm am Tag beträgt. Nach zweiwöchiger Lagerung werden S1-Prüfkörper ausgestanzt, deren Zugeigenschaften nach EN ISO 527-2 an der Z010 der Firma Zwick vermessen werden. Die dabei bestimmten Eigenschaften der jeweiligen Prepolymerabmischungen sind in Tabelle 7 aufgelistet. Dabei sind die Abmischungen von
- Beispiel 5.1, Vergleichsbeispiel 2.1
- Beispiel 5.2, Vergleichsbeispiel 2.2
- Beispiel 5.3, Vergleichsbeispiel 2.3
jeweils identisch und unterscheiden sich nur durch das eingesetzte Prepolymer. D.h. die Eigenschaften dieser Massen können jeweils direkt miteinander verglichen werden.

**Tabelle 7:**

| Ansatznummer | Bsp. 5-1 | Bsp. 5-2 | Bsp. 5-3 |
|---|---|---|---|
| Hautbildungszeit | >2 Std. | > 2 Std. | 18 min |
| Zugfestigkeit [MPa] | 0,49 | 1,29 | 3,81 |
| Reißdehnung [%] | 278,01 | 418,13 | 606,78 |
| Modul [MPa] | 0,25 | 0,5 | 1,3 |
| Shorehärte | 20 | 31 | 46 |
| | | | |

| Ansatznummer | Vbsp. 2-1 | Vbsp. 2-2 | Vbsp. 2-3 |
|---|---|---|---|
| Hautbildungszeit | > 1,5 Std. | > 1,5 Std. | 2 min |
| Zugfestigkeit [MPa] | 0,47 | 1,08 | 2,58 |
| Reißdehnung [%] | 291,95 | 473,14 | 512,31 |
| Modul [MPa] | 0,18 | 0,34 | 0,85 |
| Shorehärte | 15 | 20 | 38 |

## Patentansprüche

1. Prepolymere (A) mit Endgruppen der allgemeinen Formel [1]
-A-CH₂-SiR¹ₐ(OR²)₃₋ₐ [1],
wobei
**A** eine zweibindige Bindegruppe ausgewählt aus -O-, -S-, -(R³)N-, -O-CO-N(R³)-, -N(R³)-CO-O-, -NH-CO-NH-, -N(R⁴)-CO-NH-, -NH-CO-N(R⁴)-, -N(R⁴)-CO-N(R⁴)-,
**R¹** einen gegebenenfalls halogensubstituierten Alkyl-, Cycloalkyl-, Alkenyl- oder Arylrest mit 1-10 Kohlenstoffatomen,
**R²** einen Alkylrest mit 1-6 Kohlenstoffatomen oder einen ω-Oxaalkyl-alkylrest mit insgesamt 2-10 Kohlenstoffatomen,
**R³** Wasserstoff, einen gegebenenfalls halogensubstituierten cyclischen, linearen oder verzweigten C₁- bis C₁₈-Alkyl- oder -Alkenylrest oder einen C₆- bis C₁₈-Arylrest,
**R⁴** einen gegebenenfalls halogensubstituierten cyclischen, linearen oder verzweigten C₁- bis C₁₈-Alkyl- oder - Alkenylrest oder einen C₆- bis C₁₈-Arylrest und
**a** den Wert 0, 1 oder 2 bedeuten, wobei die Prepolymere (A) erhältlich sind durch Umsetzung von isocyanatfunktionellen Prepolymeren (A1) mit Alkoxysilanen (A2), die über mindestens eine isocyanatreaktive Gruppe verfügen,
sowie gegebenenfalls weiteren Komponenten,
mit der Maßgabe, daß die Alkoxysilane (A2) im Überschuß eingesetzt werden, so daß ein Verhältnis von isocyanatreaktiven Gruppen zu Isocyanatgruppen von mindestens 1,2:1 besteht.

2. Prepolymere (A) nach Anspruch 1, bei denen R¹ Methyl-, Ethyl- oder Phenylgruppen bedeutet.

3. Prepolymere (A) nach Anspruch 1 oder 2, bei denen **R²** Methyl- oder Ethylgruppen bedeutet.

4. Prepolymere (A) nach Anspruch 1 bis 3, bei deren Herstellung das Verhältnis von isocyanatreaktiven Gruppen zu Isocyanatgruppen von 1,4:1 bis 4:1 beträgt.

5. Prepolymere (A) nach Anspruch 1 bis 4, bei deren Herstellung Alkoxysilane (A2) der allgemeinen Formel [3] 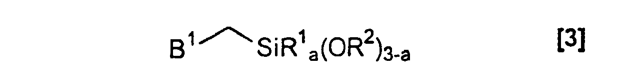 eingesetzt werden, wobei
**B¹** eine OH-, SH-, NH₂- oder eine HR³N-Gruppe bedeutet und
**R¹, R², R³** und **a** die die in Anspruch 1 angegebenen Bedeutungen aufweisen.

6. Prepolymere (A) nach Anspruch 1 bis 5, bei denen die Alkoxysilylgruppen der allgemeinen Formel [1] zu mindestens 50 % aus Dialkoxysilylgruppen (**a** = 1) bestehen.

7. Prepolymere (A) nach Anspruch 1 bis 6, bei deren Herstellung als isocyanatfunktionelle Prepolymere (A1) urethangruppenhaltige Prepolymere (A1) eingesetzt werden, die durch eine Umsetzung von Polyolen (A11) und mit Di- oder Polyisocyanaten (A12) erhältlich sind.

8. Prepolymere (A) nach Anspruch 7, bei denen die Polyole (A11) ein mittleres Molekulargewicht Mn von 1000 bis 25000 aufweisen.

9. Prepolymere (A) nach Anspruch 7 oder 8, bei denen die Polyole (A11) ausgewählt werden aus hydroxylfunktionellen Polyethern, Polyestern, Polyacrylaten und -methacrylaten, Polycarbonaten, Polystyrolen, Polysiloxanen, Polyamiden, Polyvinylestern, Polyvinylhydroxiden und Polyolefinen.

10. Prepolymere (A) nach Anspruch 7 bis 9, bei denen die Di- oder Polyisocyanate (A12) ausgewählt werden aus Diisocyanatodiphenylmethan (MDI), Tolylendiisocyanat (TDI), Diisocyanatonaphthalin (NDI), Isophorondiisocyanat (IPDI), perhydriertes MDI (H-MDI), Hexamethylendiisocyanat (HDI), polymerem MDI (P-MDI), Triphenylmethantriisocanat, Isocyanurat- und Biuret-triisocyanaten.

11. Prepolymere (A) gemäss nach Anspruch 1 bis 10 enthaltende Massen (M).

## Claims

1. Prepolymers (A) having end groups of the general formula [1]
-A-CH₂-SiR¹ₐ(OR²)₃₋ₐ [1],
where
A is a divalent linking group selected from -O-, -S-, -(R³)N-, -O-CO-N(R³)-, -N (R³)-CO-O-, -NH-CO-NH-, -N(R⁴)-CO-NH-, -NH-CO-N(R⁴)-, and -N(R⁴)-CO-N(R⁴)-,
R¹ is an optionally halogen-substituted alkyl, cycloalkyl, alkenyl or aryl radical having 1-10 carbon atoms,
R² is an alkyl radical having 1-6 carbon atoms or an ω-oxaalkyl-alkyl radical having in all 2-10 carbon atoms,
R³ is hydrogen, an optionally halogen-substituted cyclic, linear or branched C₁ to C₁₈ alkyl radical or alkenyl radical or a C₆ to C₁₈ aryl radical,
R⁴ is an optionally halogen-substituted cyclic, linear or branched C₁ to C₁₈ alkyl radical or alkenyl radical or a C₆ to C₁₈ aryl radical, and
a has the value 0, 1 or 2,
the prepolymer (A) being obtainable by reacting isocyanate-functional prepolymers (A1) with alkoxysilanes (A2) possessing at least one isocyanate-reactive group,
and optionally further components,
with the proviso that the alkoxysilanes (A2) are employed in excess, so that the ratio of isocyanate-reactive groups to isocyanate groups is at least 1.2:1.

2. The prepolymer (A) as claimed in claim 1, in which R¹ is methyl, ethyl or phenyl groups.

3. The prepolymer (A) as claimed in claim 1 or 2, in which R² is methyl or ethyl groups.

4. The prepolymer (A) as claimed in claim 1 to 3, in the preparation of which the ratio of isocyanurate-reactive groups to isocyanate groups is from 1.4:1 to 4:1.

5. The prepolymer (A) as claimed in any one of claims 1 to 4, in the preparation of which alkoxysilanes (A2) of the general formula [3] 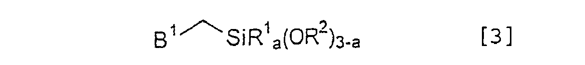 are employed, where
B¹ is an OH, SH or NH₂ group or a group HR³N and
R¹, R², R³ and a are as defined in claim 1.

6. The prepolymer (A) as claimed in claim 1 to 5, in which at least 50% of the alkoxysilyl groups of the general formula [1] are composed of dialkoxysilyl groups (a = 1).

7. The prepolymer (A) as claimed in claim 1 to 6, in the preparation of which urethane-group-containing prepolymers (A1) are employed as isocyanate-functional prepolymers (A1), obtainable by a reaction of polyols (A11) and with di- or polyisocyanates (A12).

8. The prepolymer (A) as claimed in claim 7, in which the polyols (A11) have an average molecular weight Mn of 1000 to 25 000.

9. The prepolymer (A) as claimed in claim 7 or 8, in which the polyols (A11) are selected from hydroxyl-functional polyethers, polyesters, polyacrylates and polymethacrylates, polycarbonates, polystyrenes, polysiloxanes, polyamides, polyvinyl esters, polyvinyl hydroxides and polyolefins.

10. The prepolymer (A) as claimed in any one of claims 7 to 9, in which the di- or polyisocyanates (A12) are selected from diisocyanatodiphenylmethane (MDI), tolylene diisocyanate (TDI), diisocyanatonaphthalene (NDI), isophorone diisocyanate (IPDI), perhydrogenated MDI (H-MDI), hexamethylene diisocyanate (HDI), polymeric MDI (P-MDI), triphenylmethane triisocyanate, isocyanurate triisocyanates and biuret triisocyanates.

11. Compositions (M) comprising prepolymers (A) according to any one of claims 1 to 10.

## Revendications

1. Prépolymères (A) renfermant des groupes terminaux de formule générale [1]
-A-CH₂-SiR¹ₐ(OR²)₃₋ₐ [1],
dans laquelle :
A représente un groupe de liaisons bivalent choisi parmi un groupe -O-, un groupe -S-, un groupe -(R³)N-, un groupe -O-CO-N(R³)-, un groupe -N(R³)-CO-O-, un groupe -NH-CO-NH-, un groupe -N(R⁴)-CO-NH-, un groupe -NH-CO-N(R⁴)-, un groupe -N(R⁴)-CO-N(R⁴)-,
R¹ représente un radical alkyle, un radical cycloalkyle, un radical alcényle ou un radical aryle éventuellement halogéno-substitué, renfermant de 1 à 10 atomes de carbone,
R² représente un radical alkyle renfermant de 1 à 6 atomes de carbone ou un radical ω-oxaalkyl-alkyle renfermant au total de 2 à 10 atomes de carbone,
R³ représente un atome d'hydrogène, un radical alkyle ou alcényle en C₁ à C₁₈, cyclique, linéaire ou ramifié, éventuellement halogéno-substitué, ou un radical aryle en C₆ à C₁₈,
R⁴ représente un radical alkyle ou alcényle en C₁ à C₁₈, cyclique, linéaire ou ramifié, éventuellement halogéno-substitué, ou un radical aryle en C₆ à C₁₈, et
a vaut 0, 1 ou 2,
où les prépolymères (A) peuvent être obtenus par la réaction de :
prépolymères à fonction isocyanate (A1) avec des alcoxysilanes (A2) qui disposent d'au moins un groupe réactif vis-à-vis des isocyanates,
et, éventuellement, de composants supplémentaires,
à condition que les alcoxysilanes (A2) soient utilisés en excès, de telle sorte que le rapport entre les groupes réactifs vis-à-vis des isocyanates et les groupes isocyanate soit d'au moins 1,2:1.

2. Prépolymères (A) selon la revendication 1, dans lesquels R¹ représente un groupe méthyle, un groupe éthyle ou un groupe phényle.

3. Prépolymères (A) selon la revendication 1 ou 2, dans lesquels R² représente un groupe méthyle ou un groupe éthyle.

4. Prépolymères (A) selon les revendications 1 à 3, pour la préparation desquels le rapport entre les groupes réactifs vis-à-vis des isocyanates et les groupes isocyanate est de 1,4:1 à 4:1.

5. Prépolymères (A) selon les revendications 1 à 4, pour la préparation desquels on utilise des alcoxysilanes (A2) de formule générale [3] 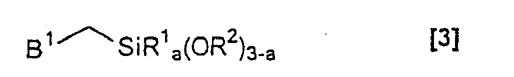 dans laquelle:
B¹ représente un groupe OH-, un groupe SH-, un groupe NH₂- ou un groupe HR³N-, et
R¹, R², R³ et a présentent les significations indiquées dans la revendication 1.

6. Prépolymères (A) selon les revendications 1 à 5, dans lesquels les groupes alcoxysilyle de formule générale [1] sont composés d'au moins 50 % de groupes dialcoxysilyle (a = 1).

7. Prépolymères (A) selon les revendications 1 à 6, pour la préparation desquels on utilise, en tant que prépolymères à fonction isocyanate (A1), des prépolymères renfermant des groupes uréthane (A1) qui peuvent être obtenus par une réaction de polyoles (A11) avec des diisocyanates ou des polyisocyanates (A12).

8. Prépolymères (A) selon la revendication 7, dans lesquels les polyoles (A11) présentent un poids moléculaire moyen Mn de 1 000 à 25 000.

9. Prépolymères (A) selon la revendication 7 ou 8, dans lesquels les polyoles (A11) sont choisis parmi des polyéthers, des polyesters, des polyacrylates et polyméthacrylates, des polycarbonates, des polystyrènes, des polysiloxanes, des polyamides, des polyvinylesters, des polyvinylhydroxydes et des polyoléfines, à fonction hydroxyle.

10. Prépolymères (A) selon les revendications 7 à 9, dans lesquels les diisocyanates ou les polyisocyanates (A12) sont choisis parmi le diisocyanatodiphénylméthane (MDI), le diisocyanate de tolylène (TDI), le diisocyanatonaphtalène (NDI), le diisocyanate d'isophorone (IPDI), le MDI perhydrogéné (H-MDI), le diisocyanate d'hexaméthylène (HDI), un MDI polymère (P-MDI), le triisocyanate de triphénylméthane, des triisocyanates d'isocyanurate et de biuret.

11. Compositions (M) comprenant des prépolymères (A) selon les revendications 1 à 10.
